# EUROPEAN PATENT APPLICATION

(11) **EP 4 765 283 A1**
(43) Date of publication of application: **24.06.2026**
(21) Application number: 25205758.3
(22) Date of filing: 30.09.2025
(51) Int. Cl.: H01M 10/052, H01M 10/0562

(54) **SULFIDE-BASED SOLID ELECTROLYTE, MANUFACTURING METHOD THEREOF, AND ALL-SOLID STATE BATTERY COMPRISING THE SAME**

(30) Priority: 18.12.2024 KR 20240189986; 23.09.2025 KR 20250136945
(71) Applicant: SK On Co., Ltd., Seoul 03161 (KR)
(72) Inventor: BACK, Ji Su, 34124 Daejeon (KR)
(74) Representative: Stolmár & Partner Patentanwälte PartG mbB

(57) **Abstract**

A sulfide-based solid electrolyte comprises 0.1 to 5 mol% of at least one element A that is selected from the group consisting of Group 1 and Group 2 elements, excluding Li, when analyzed by inductively coupled plasma spectroscopy (ICP). Accordingly, the moisture stability of a sulfide-based solid electrolyte may be improved.

## Description

### TECHNICAL FIELD

The disclosure and implementations disclosed in this patent document generally relate to a sulfide-based solid electrolyte, a method of manufacturing the same, and an all-solid state battery comprising the same.

### BACKGROUND

Recently, the development of all-solid-state batteries containing solid electrolytes has been continuously progressing. Such all-solid-state batteries, which incorporate solid electrolytes instead of existing liquid electrolytes, offer superior safety against explosions and fires and enhanced energy density. Potential solid electrolytes for these all-solid-state batteries comprise polymer-based solid electrolytes, oxide-based solid electrolytes, sulfide-based solid electrolytes, and the like.

Thereamong, sulfide-based solid electrolytes are attracting attention as a promising electrolyte for commercialization due to their relatively high ionic conductivity. Consequently, there is a growing need to develop technologies that may improve the performance of sulfide-based solid electrolytes.

### SUMMARY

The present disclosure can be implemented in some embodiments to provide a sulfide-based solid electrolyte with improved moisture stability.

According to an aspect of the present disclosure, provided is a sulfide-based solid electrolyte with improved ionic conductivity.

According to an aspect of the present disclosure, a sulfide-based solid electrolyte may be manufactured using low-cost raw materials.

According to an aspect of the present disclosure, provided is a method of manufacturing a sulfide-based solid electrolyte that is easy to synthesize on a large scale.

In some embodiments of the present disclosure, a sulfide-based solid electrolyte comprises 0.1 to 5 mol% of at least one element A selected from the group consisting of Group 1 and Group 2 elements, excluding Li, when analyzed by inductively coupled plasma spectroscopy (ICP).

In some embodiments, the sulfide-based solid electrolyte may be represented by Chemical Formula 1: LiₐPS_{b}(M1)_{c}(M2)_{d}AₓB_{y}, where 1≤a≤6, 1≤b≤5, 0≤c≤3, 0≤d≤3, 0<x≤1, and 0<y≤2, Li is lithium, P is phosphorus, S is sulfur, M1 is a Group 17 element, M2 is a Group 17 element different from M1, A is at least one element selected from the group consisting of Group 1 elements and Group 2 elements, excluding Li, and B is at least one element selected from the group consisting of Group 17 elements, NO₃⁻ and BF₄⁻.

In some embodiments, the element A may correspond to A in a compound represented by Chemical Formula 2: AB_{y}, where A is at least one element selected from the group consisting of Group 1 elements and Group 2 elements, excluding Li, B is at least one element selected from the group consisting of Group 17 elements, NO₃⁻ and BF₄⁻, and y is 1 or 2.

In some embodiments, the sulfide-based solid electrolyte may have a binding energy of a peak representing element A, different from binding energies of peaks representing phosphorus (P) and sulfur (S) when analyzed by SEM-EDS using a scanning electron microscope (SEM) and an energy-dispersive X-ray spectrometer (EDS).

In some embodiments, the sulfide-based solid electrolyte may have a region representing element A in an EDS mapping image different from a region representing phosphorus (P) and sulfur (S), when analyzed by SEM-EDS using a scanning electron microscope (SEM) and an energy-dispersive X-ray spectrometer (EDS).

In some embodiments of the present disclosure, a method of manufacturing a sulfide-based solid electrolyte comprises preparing a first solution by mixing a sulfur compound represented by Chemical Formula 3: AₓS and a lithium compound represented by Chemical Formula 4: LiB with a first solvent; obtaining a first mixture comprising lithium sulfide (Li₂S) and a compound represented by Chemical Formula 2: AB_{y}, from the first solution; preparing a second solution by mixing the first mixture with either i) diphosphorus pentasulfide (P₂S₅), a first lithium halide, and a second solvent, or ii) diphosphorus pentasulfide (P₂S₅), a first lithium halide, a second lithium halide, and a second solvent; and obtaining a second mixture from the second solution and then heat-treating the second mixture and obtaining a sulfide-based solid electrolyte. The sulfide-based solid electrolyte comprises a content of an element A of 0.1 to 5 mol, corresponding to A in the compound represented by the chemical formula 2, as analyzed by inductively coupled plasma spectroscopy (ICP). In the chemical formula 2, A is at least one element selected from the group consisting of Group 1 and Group 2 elements excluding Li, B is at least one element selected from the group consisting of Group 17 elements, NO₃⁻ and BF₄⁻, and y is 1 or 2. In the chemical formula 3, A is at least one element selected from the group consisting of Group 1 and Group 2 elements excluding Li, S is sulfur, and x is 1 or 2. In the chemical formula 4, Li is lithium and B is at least one element selected from the group consisting of Group 17 elements, NO₃⁻ and BF₄⁻.

In some embodiments, the sulfide-based solid electrolyte may be represented by Chemical Formula 1: LiₐPS_{b}(M1)_{c}(M2)_{d}AₓB_{y}, where 1≤a≤6, 1≤b≤5, 0≤c≤3, 0≤d≤3, 0<x≤1, and 0<y≤2, Li is lithium, P is phosphorus, S is sulfur, M1 is a Group 17 element, M2 is a Group 17 element different from M1, A is at least one selected from the group consisting of Group 1 elements and Group 2 elements excluding Li, and B is at least one selected from the group consisting of Group 17 elements, NO₃⁻ and BF₄⁻.

In some embodiments, the method of manufacturing a sulfide-based solid electrolyte may further comprise removing a portion of the compound represented by the chemical formula 2, prior to the obtaining a first mixture from the first solution.

In some embodiments, the removing a portion of the compound represented by the chemical formula 2 may be performed by cooling the first solution to 15°C to 25°C.

In some embodiments, the first solvent may comprise at least one selected from the group consisting of alcohol-based solvents, tetrahydrofuran-based solvents, and phosphoramide-based solvents.

In some embodiments, the second solvent may comprise at least one selected from the group consisting of alcohol-based solvents, tetrahydrofuran-based solvents, cyanide-based solvents, and phosphoramide-based solvents.

In some embodiments, the heat treating of the second mixture may be performed at a temperature of 250°C to 650°C.

In some embodiments of the present disclosure, an all-solid state battery comprises the sulfide-based solid electrolyte according to one of the above-described embodiments.

### BRIEF DESCRIPTION OF DRAWINGS

Certain aspects, features, and advantages of the present disclosure are illustrated by the following detailed description with reference to the accompanying drawings.
FIG. 1 is a diagram illustrating the results of impedance analysis performed on a sulfide-based solid electrolyte of an example before and after exposure to air.
FIG. 2 is a diagram illustrating the results of impedance analysis performed on a sulfide-based solid electrolyte of a comparative example before and after exposure to air.
FIG. 3A is a diagram illustrating the results of peak analysis of respective components according to binding energy using a scanning electron microscope (SEM) and an energy-dispersive X-ray spectrometer (EDS) for the sulfide-based solid electrolyte of an example.
FIGS. 3B, 3C and 3D are diagrams illustrating the results of element A (FIG. 3B), phosphorus (FIG. 3C), and sulfur (FIG. 3D) analyses performed on a scanning electron microscope (SEM) and an energy-dispersive X-ray spectrometer (EDS) for the sulfide-based solid electrolyte of an example, respectively.
FIG. 4A is a diagram illustrating the results of analyzing peaks of respective components according to binding energy using a scanning electron microscope (SEM) and an energy-dispersive X-ray spectrometer (EDS) for a sulfide-based solid electrolyte of a comparative example.
FIGS. 4B and 4C are diagrams illustrating the results of analyzing phosphorus (FIG. 4B) and sulfur (FIG. 4C) using a scanning electron microscope (SEM) and an energy-dispersive X-ray spectrometer (EDS), respectively, for a sulfide-based solid electrolyte of a comparative example.

### DETAILED DESCRIPTION

Features of the present disclosure disclosed in this patent document are described by example embodiments with reference to the accompanying drawings.

Hereinafter, the technology disclosed in this specification and its implementation examples will be described in detail with reference to the attached drawings. However, the embodiments of the technology may be modified in various ways and are not limited to the implementation examples described below. Furthermore, the technology disclosed in this specification may be applied not only within the configurations of the implementation examples described below, but also selectively combined with all or part of the implementation examples to allow for various modifications.

As described above, there is a need for the development of technologies that may improve the performance of sulfide-based solid electrolytes. According to an implementation example, doping a sulfide-based solid electrolyte with a different element may improve ionic conductivity and/or moisture stability. For example, a portion of the phosphorus (P) or sulfur (S) in Li₆PS₅Cl, a sulfide-based solid electrolyte with an argyrodite structure, may be replaced with a different element.

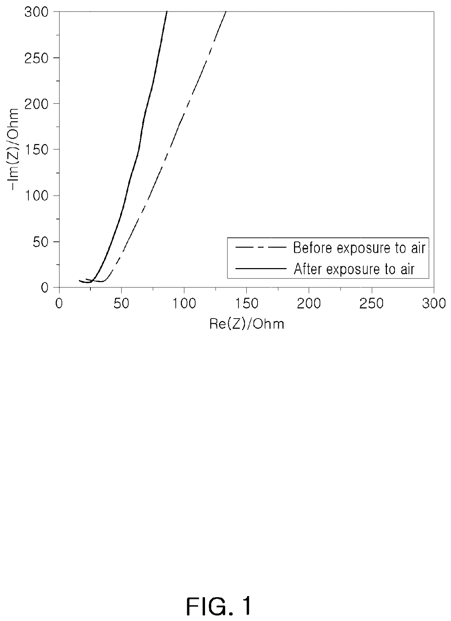

According to an embodiment, a sulfide-based solid electrolyte with improved performance, such as moisture stability, may be manufactured by replacing lithium (Li) with a different element. According to this embodiment, it may be easy to synthesize a sulfide-based solid electrolyte with improved performance in large quantities, and the manufacturing process may also be economically efficient. Hereinafter, embodiments of the technology disclosed in this disclosure will be described in detail with reference to FIGS. 1, 2, 3A, 3B, 3C, 3D, 4A, 4B and 4C.

### Sulphide-Based Solid Electrolyte

According to an embodiment, a sulfide-based solid electrolyte comprises 0.1 to 5 mol% of at least one element A selected from the group consisting of Group 1 and Group 2 elements, excluding Li, as analyzed by inductively coupled plasma spectroscopy (ICP). The sulfide-based solid electrolyte may exhibit excellent moisture stability due to a portion of the lithium (Li) being replaced (doped) with a different element.

In some embodiments, the sulfide-based solid electrolyte may be represented by the following Chemical Formula 1.

[Chemical Formula 1] LiₐPS_{b}(M1)_{c}(M2)_{d}AₓB_{y}

In the Chemical Formula 1, 1≤a≤6, 1≤b≤5, 0≤c≤3, 0≤d≤3, 0<x≤1, 0<y≤2, Li is lithium, P is phosphorus, S is sulfur, M1 is a Group 17 element, M2 is a Group 17 element different from M1, A is at least one selected from the group consisting of Group 1 elements and Group 2 elements excluding Li, and B is at least one selected from the group consisting of Group 17 elements, NO₃⁻ and BF₄⁻. The element A may correspond to A in the Chemical Formula 1.

In some embodiments, the element A may correspond to A in a compound represented by Chemical Formula 2 below.

[Chemical Formula 2] AB_{y}

In Chemical Formula 2, A is at least one element selected from the group consisting of Group 1 and Group 2 elements excluding Li, B is at least one element selected from the group consisting of Group 17 elements, NO₃⁻ and BF₄⁻, and y is 1 or 2.

The compound represented by Chemical Formula 2 may be produced during the process of manufacturing lithium sulfide (Li₂S) by reacting a sulfur compound represented by Chemical Formula 3 below and a lithium compound represented by Chemical Formula 4 below.

[Chemical Formula 3]

### AₓS

In Chemical Formula 3, A is at least one element selected from the group consisting of Group 1 and Group 2 elements excluding Li, S is sulfur, and x is 1 or 2.

[Chemical Formula 4] LiB

In Chemical Formula 4, Li represents lithium, and B represents at least one element selected from the group consisting of Group 17 elements, NO₃⁻ and BF₄⁻.

In some embodiments, the sulfide-based solid electrolyte represented by Chemical Formula 1 may be a sulfide-based solid electrolyte doped with sodium (Na) in which a portion of lithium (Li) is replaced by sodium (Na). In detail, the compound represented by Chemical Formula 2 may be sodium chloride (NaCl). When sodium (Na) is doped into the sulfide-based solid electrolyte represented by Chemical Formula 1, the electrolyte may exhibit excellent moisture stability and ionic conductivity.

In some embodiments, the compound represented by Chemical Formula 3 may be sodium sulfide (Na₂S), and the compound represented by Chemical Formula 4 may be lithium chloride (LiCl).

The sulfide-based solid electrolyte, when analyzed by inductively coupled plasma spectrometry (ICP), contains 0.1 to 5 mol% of at least one element A selected from the group consisting of Group 1 elements and Group 2 elements excluding Li. The ICP analysis may quantitatively measure the content of cations contained in the analysis target. The ICP analysis device or the like is not particularly limited. For example, the ICP analysis may be performed using an Agilent 5800.

In some embodiments, the sulfide-based solid electrolyte, when analyzed by inductively coupled plasma spectrometry (ICP), may contain 3 mol% or less, or 1.5 mol% or less, and 0.5 mol% or more, 1 mol% or more, or 1.4 mol% or more of at least one element A selected from the group consisting of Group 1 elements and Group 2 elements excluding Li.

In some embodiments, the sulfide-based solid electrolyte may have a binding energy of a peak representing element A, which is different from the binding energies of peaks representing phosphorus (P) and sulfur (S), when analyzed by scanning electron microscopy (SEM) and energy-dispersive X-ray spectrometry (SEM-EDS).

The peaks representing phosphorus (P) and sulfur (S) may correspond to phosphorus (P) and sulfur (S) contained in the sulfide-based solid electrolyte represented by Chemical Formula 1, and the peak representing element A may correspond to element A contained in the compound represented by Chemical Formula 2.

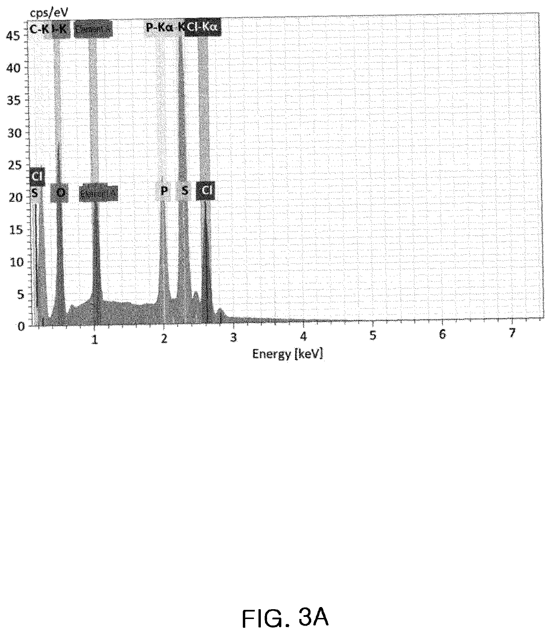

As illustrated in FIG. 3A, in some embodiments, the sulfide-based solid electrolyte may be clearly distinguishable when analyzed by SEM-EDS, as the peaks representing phosphorus (P) and sulfur (S) in Chemical Formula 1 are different from the peak representing element A in Chemical Formula 2.

n some embodiments, in Chemical Formula 1, the peak representing sulfur (S) may appear at binding energies of 0.1 to 0.2 keV (for example, 0.15 keV) and 2.3 to 2.4 keV (for example, 2.31 keV) during SEM-EDS analysis, and the peak representing phosphorus (P) may appear at binding energies of 2.1 to 2.2 keV (for example, 2.013 keV) during SEM-EDS analysis.

In some embodiments, the peak corresponding to A in Chemical Formula 2 may appear at binding energies of 1.0 to 1.1 keV during SEM-EDS analysis.

In some embodiments, the sulfide-based solid electrolyte may comprise a region representing element A in an EDS mapping image when analyzed by a scanning electron microscope (SEM) and an energy-dispersive X-ray spectrometer (EDS), which is different from a region representing phosphorus (P) and sulfur (S). For example, the region representing phosphorus (P) and sulfur (S) may correspond to a region representing a sulfide-based solid electrolyte represented by Chemical Formula 1. Furthermore, the region representing element A may correspond to a region representing a compound represented by Chemical Formula 2.

The distinction of regions representing respective components in the EDS mapping image may be determined and obtained by quantifying the points where respective components are detected in the EDS mapping image and storing an image of the region where the target component is detected.

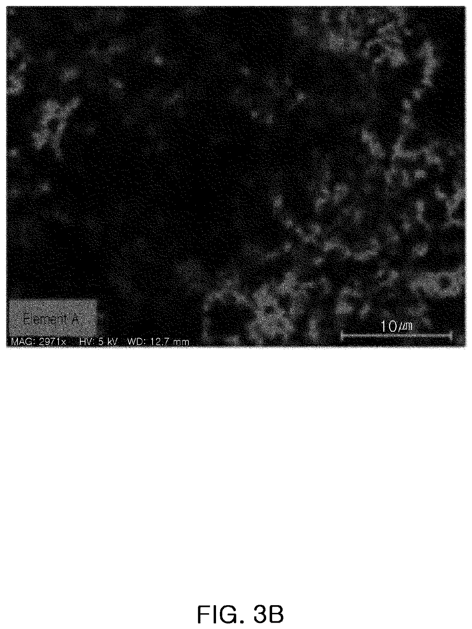

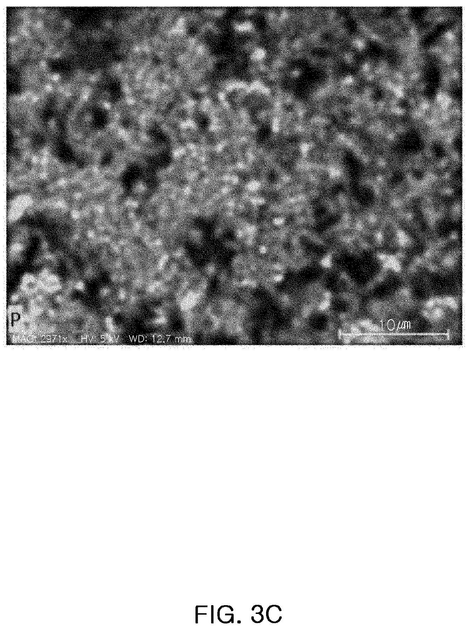

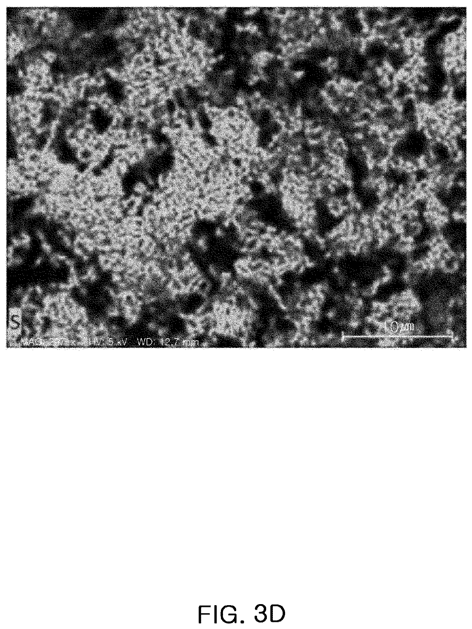

As illustrated in FIGS. 3B, 3C and 3D, in some embodiments, the sulfide-based solid electrolyte may comprise a region which corresponds to A in Chemical Formula 2 in the EDS mapping image during SEM-EDS analysis and which is clearly different from the region representing phosphorus (P) and sulfur (S) in Chemical Formula 1.

The SEM-EDS analysis equipment, conditions, and the like are not particularly limited. For example, the SEM-EDS analysis may be performed using a FlatQuad of Bruker Co. equipped with an EDS device coupled to a SEM under conditions of an acceleration voltage of 5 kV, a pulse throughput of 130 kcps, and a working distance of 15 mm.

A sulfide-based solid electrolyte according to any of the above embodiments may be manufactured using the method described below.

### Method of Manufacturing Sulfide-Based Solid Electrolyte

A method of manufacturing a sulfide-based solid electrolyte according to an embodiment comprises the operations of: preparing a first solution by mixing a sulfur compound represented by the following Chemical Formula 3 and a lithium compound represented by the following Chemical Formula 4 with a first solvent; obtaining a first mixture comprising lithium sulfide (Li₂S) and a compound represented by the following Chemical Formula 2 from the first solution; preparing a second solution by mixing the first mixture with i) diphosphorus pentasulfide (P₂S₅), a first lithium halide, and a second solvent, or ii) diphosphorus pentasulfide (P₂S₅), a first lithium halide, a second lithium halide, and a second solvent; and obtaining a second mixture from the second solution and then heat-treating the same to obtain a sulfide-based solid electrolyte. The sulfide-based solid electrolyte has a content of 0.1 to 5 mol% of element A corresponding to A in the compound represented by Chemical Formula 2 below in an inductively coupled plasma spectroscopy (ICP) analysis.

[Chemical Formula 2] AB_{y}

In Chemical Formula 2, A is at least one element selected from the group consisting of Group 1 and Group 2 elements excluding Li, B is at least one element selected from the group consisting of Group 17 elements, NO₃⁻ and BF₄⁻, and y is 1 or 2.

[Chemical Formula 3] AₓS

In Chemical Formula 3, A is at least one element selected from the group consisting of Group 1 and Group 2 elements excluding Li, S is sulfur, and x is 1 or 2.

[Chemical Formula 4] LiB

In the above Chemical Formula 4, Li is lithium and B is at least one element selected from the group consisting of Group 17 elements, NO₃⁻ and BF₄⁻.

A method of manufacturing the sulfide-based solid electrolyte may be performed economically using inexpensive raw materials. Furthermore, the method of manufacturing the sulfide-based solid electrolyte may facilitate large-scale synthesis by utilizing a liquid-phase synthesis reaction. Below, respective operations of the method of manufacturing the sulfide-based solid electrolyte is described in detail.

### <First Solution Preparation Operation>

The first solution preparation operation may be an operation of synthesizing lithium sulfide (Li₂S) by reacting a sulfur compound (AₓS) represented by Chemical Formula 3 and a lithium compound (LiB) represented by Chemical Formula 4. The first solution may comprise lithium sulfide (Li₂S) synthesized by the reaction of compounds represented by Chemical Formulas 3 and 4 and a compound (AB_{y}) represented by Chemical Formula 2. The sulfur compound (AₓS) represented by Chemical Formula 3 and the lithium compound (LiB) represented by Chemical Formula 4 may be prepared in a molar ratio of 1:2 for the synthesis of lithium sulfide (Li₂S).

In some embodiments, the first solution preparation operation may be performed at room temperature or more. For example, the first solution preparation operation may be performed at a temperature of 25°C or higher and at a temperature of the boiling point or lower of the solvent (for example, 70°C or lower).

In some embodiments, the method of manufacturing a sulfide-based solid electrolyte may further comprise an operation of removing a portion of the compound represented by Chemical Formula 2 before obtaining the first mixture from the first solution. The compound represented by Chemical Formula 2 may be a compound for doping a heterogeneous element into a sulfide-based solid electrolyte, but if the content thereof is excessive, the performance of the sulfide-based solid electrolyte may be degraded. Therefore, when a portion of the compound represented by Chemical Formula 2 is removed from the first solution before obtaining the first mixture, a sulfide-based solid electrolyte with excellent performance may be manufactured.

In some embodiments, the operation of removing a portion of the compound represented by Chemical Formula 2 may be performed by cooling the first solution to 15°C to 25°C. Lowering the temperature of the first solution to room temperature (25°C or lower) reduces the solubility of the compound represented by Chemical Formula 2, contained in the first solution, allowing the same to precipitate. If the temperature of the first solution exceeds 25°C, the compound represented by Chemical Formula 2 may not precipitate properly. Conversely, if the temperature of the first solution is lower than 15°C, the solubility of lithium sulfide (Li₂S) may also decrease, reducing the yield of lithium sulfide (Li₂S), and furthermore, excessive precipitation of the compound represented by Chemical Formula 2 may prevent doping of the sulfide-based solid electrolyte.

In some embodiments, the first solvent may be a polar solvent. For example, the first solvent may comprise at least one selected from the group comprising alcohol solvents, tetrahydrofuran solvents, and phosphoramide solvents.

The alcohol solvent is not particularly limited, as long as it is an alcohol compound having a hydroxyl group (-OH). For example, the alcohol solvent may be methanol, ethanol, isopropanol, or the like.

The tetrahydrofuran-based solvent is not particularly limited, as long as it is a compound having a pentagonal heterocycle in which four carbon atoms and an oxygen atom are connected by a single bond. For example, the tetrahydrofuran-based solvent may be at least one selected from tetrahydrofuran and compounds having at least one functional group bonded to the 2nd or 3rd carbon position of the tetrahydrofuran. For example, the compound having at least one functional group bonded to the 2nd or 3rd carbon position of the tetrahydrofuran may be 2-methyltetrahydrofuran, 3-methyltetrahydrofuran, 2-(isocyanomethyl)tetrahydrofuran, 3-(aminomethyl)tetrahydrofuran, or the like.

The phosphoramide solvent is not particularly limited as long as it is a compound having a structure in which a phosphorus atom connected to an oxygen atom by a double bond is connected to an oxygen atom or a nitrogen atom by three single bonds. For example, the phosphoramide solvent may be phosphoramide, diethyl phosphoramidate, hexamethyl phosphoramide, or the like.

In some embodiments, the concentration of the first solution may range from 0.1 to 0.5 M. If the concentration of the first solution is less than 0.1 M, the amount of solvent used may increase, leading to higher process costs. If the concentration of the first solution exceeds 0.5 M, the yield of the sulfide-based solid electrolyte may decrease.

### <First Mixture Obtaining Operation>

The first mixture obtaining operation refers to obtaining a first mixture comprising lithium sulfide (Li₂S) and the compound represented by Chemical Formula 2 from the first solution prepared as described above. Precipitated substances within the first solution may be removed by filtration. The filtration of the first solution may be performed under an inert gas environment, such as argon (Ar).

In some embodiments, in the case in which the method of manufacturing a sulfide-based solid electrolyte further comprises an operation of removing a portion of the compound represented by Chemical Formula 2 prior to obtaining the first mixture from the first solution; a portion of the compound represented by Chemical Formula 2 may be precipitated within the first solution by a cooling process and then removed by filtration.

The first mixture may be obtained by drying the filtered first solution to remove the first solvent. The filtered first solution contains the first mixture dissolved therein, and removing the first solvent through the drying process may obtain a high-purity first mixture.

The drying of the first solution may be performed at a temperature of the boiling point or higher of the first solvent used, which is sufficient to remove the first solvent. In some embodiments, the drying of the first solution may be performed at a temperature of 70°C or higher and 900°C or lower, under vacuum or argon (Ar) flow.

### <Second Solution Preparation operation>

The second solution preparation operation may be an operation of preparing a second mixture for preparing a sulfide-based solid electrolyte and a second solution containing the second mixture, using the first mixture obtained as described above. In detail, the second solution preparation operation may be an operation of mixing the first mixture with i) diphosphorus pentasulfide (P₂S₅), a first lithium halide, and a second solvent, or ii) diphosphorus pentasulfide (P₂S₅), a first lithium halide, a second lithium halide, and a second solvent.

The first lithium halide refers to a lithium halide represented by the chemical formula LiM1, where M1 is a Group 17 element and has the same meaning as M1 in Chemical Formula 1.

The second lithium halide is represented by the chemical formula LiM2 and refers to a lithium halide different from the first lithium halide, where M2 is a Group 17 element different from M1 and has the same meaning as M2 in Chemical Formula 1.

In some embodiments, the content of the first mixture comprised in the second solution may be 34 to 44 wt%.

In some embodiments, the content of diphosphorus pentasulfide (P₂S₅) comprised in the second solution may be 41 to 42 wt%.

In some embodiments, when the second solution preparation operation is an operation of mixing the first mixture with diphosphorus pentasulfide (P₂S₅), the first lithium halide, and a second solvent, the content of the first lithium halide comprised in the second solution may be 15 to 24 wt%.

In some embodiments, when the second solution preparation operation is an operation of mixing the first mixture with phosphorus pentasulfide (P₂S₅), a first lithium halide, a second lithium halide, and a second solvent, the total content of the first lithium halide and the second lithium halide contained in the second solution may be 22 to 28 wt%. The weight ratio of the first lithium halide and the second lithium halide contained in the second solution may be 0.18 to 22.

In some embodiments, the second solvent may be a polar solvent. For example, the second solvent may comprise at least one selected from the group consisting of alcohol-based solvents, tetrahydrofuran-based solvents, cyanide-based solvents, and phosphoramide-based solvents.

The cyanide-based solvent is not particularly limited as long as it is a cyanide compound having a cyano group (C≡N). For example, the cyanide-based solvent may be benzyl cyanide, 4-methylbenzyl cyanide, allyl cyanide, acetonitrile, or the like.

Detailed descriptions of the alcohol solvent, tetrahydrofuran solvent, and phosphoramide solvent overlap with the above description and are therefore omitted.

### <Sulphide-Based Solid Electrolyte Obtaining Operation>

The sulfide-based solid electrolyte obtaining operation may refer to an operation of obtaining a second mixture from the second solution prepared as described above and heat-treating the second mixture to obtain a sulfide solid electrolyte represented by Chemical Formula 1.

The second mixture may be obtained by removing the second solvent through drying the second solution prepared as described above. The second mixture is dissolved in the second solution, and removing the second solvent through the drying process yields a high-purity second mixture.

The second mixture may be i) a mixture of the first mixture, diphosphorus pentasulfide (P₂S₅), and a first lithium halide, or ii) a mixture of the first mixture, diphosphorus pentasulfide (P₂S₅), a first lithium halide, and a second lithium halide.

The drying process of the second solution may be performed at a temperature above the boiling point of the second solvent used, at which the second solvent may be removed. In some embodiments, the drying process of the second solution may be performed at a temperature above 70°C and below 200°C in a vacuum.

The second mixture obtained from the second solution may be heat-treated to form a sulfide-based solid electrolyte represented by Chemical Formula 1. In some embodiments, the heat treatment of the second mixture may be performed at a temperature between 250°C and 650°C. For example, the heat treatment of the second mixture may be performed at a temperature above 350°C or above 450°C and below 600°C or below 550°C. The heat treatment of the second mixture may be performed under an inert gas environment, such as argon (Ar) .

### All-Solid State Battery

According to an embodiment, an all-solid state battery comprises a sulfide-based solid electrolyte according to any one of the above-described embodiments. For example, the all-solid state battery may comprise the sulfide-based solid electrolyte according to any one of the above-described embodiments, between an anode and a cathode.

The structure, components, and the like of the cathode and anode are not particularly limited. For example, the cathode and anode may each have a structure comprising an electrode current collector, and an electrode mixture layer on at least one surface of the electrode current collector.

The components of the electrode current collector are not particularly limited. For example, the electrode current collector may be a plate or foil made of at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), and alloys thereof. Furthermore, the thickness of the electrode current collector is not particularly limited. For example, the thickness of the anode current collector may be 0.1 to 50 µm.

The electrode mixture layer may comprise a cathode active material or an anode active material. The cathode active material and the anode active material are not particularly limited and may comprise a compound capable of reversibly intercalating and deintercalating lithium ions.

The cathode active material is not particularly limited. For example, the cathode active material may comprise a lithium-nickel metal oxide. The lithium-nickel metal oxide may further comprise at least one of cobalt (Co), manganese (Mn), and aluminum (Al).

In some embodiments, the cathode active material or the lithium-nickel metal oxide may comprise a layered structure or crystal structure represented by Chemical Formula 5 below.

[Chemical Formula 5] LiₓNiₐM_{b}O_{2+z}

In Chemical Formula 5, 0.9≤x≤1.2, 0.6≤a≤0.99, 0.01≤b≤0.4, and - 0.5≤z≤0.1 may be satisfied. As described above, M may comprise Co, Mn, and/or Al.

The chemical structure represented by Chemical Formula 5 represents the bonding relationships within the layered structure or crystal structure of the cathode active material and does not exclude other additional elements. For example, M may comprise Co and/or Mn, and Co and/or Mn, along with Ni, may serve as the main active element of the cathode active material. The above Chemical Formula 5 is provided to express the bonding relationship of the main active element and should be understood to encompass the introduction and substitution of additional elements.

In some embodiments, auxiliary elements may be comprised in addition to the main active element to enhance the chemical stability of the cathode active material or the layered/crystal structure. The auxiliary elements may be incorporated into the layered/crystal structure to form bonds, and in this case, they should be understood to be comprised within the chemical structure range represented by Chemical Formula 5.

The auxiliary elements may comprise at least one of, for example, Na, Mg, Ca, Y, Ti, Hf, V, Nb, Ta, Cr, Mo, W, Fe, Cu, Ag, Zn, B, Al, Ga, C, Si, Sn, Sr, Ba, Ra, P, and Zr. For example, the auxiliary elements, such as Al, may also function as auxiliary active elements that contribute to the capacity/output activity of the cathode active material, together with Co or Mn.

For example, the cathode active material or the lithium-nickel metal oxide may comprise a layered structure or crystal structure represented by the following Chemical Formula 5-1.

[Chemical Formula 5-1] LiₓNiₐM1_{b1}M2_{b2}O_{2+z}

In Chemical Formula 5-1, M1 may comprise Co, Mn, and/or Al. M2 may comprise the auxiliary elements described above. In Chemical Formula 5-1, 0.9≤x≤1.2, 0.6≤a≤0.99, 0.01≤b1+b2≤0.4, and -0.5≤z≤0.1 may be satisfied.

The cathode active material may further comprise a coating element or doping element. For example, elements substantially identical to or similar to the auxiliary elements described above may be used as the coating element or doping element. For example, the above-described elements may be used alone or in combination of two or more.

The coating element or doping element may be present on the surface of the lithium-nickel metal oxide particle, or may penetrate through the surface of the lithium-nickel metal oxide particle and be comprised in the bonding structure represented by Chemical Formula 5 or Chemical Formula 5-1.

The cathode active material may comprise a nickel-cobalt-manganese (NCM)-based lithium oxide. In this case, an NCM-based lithium oxide with an increased nickel content may be used.

The Ni content (for example, the mole fraction of nickel out of the total moles of nickel, cobalt, and manganese) in the NCM-based lithium oxide may be 0.6 or more, 0.7 or more, or 0.8 or more. In some embodiments, the Ni content may be 0.8 to 0.95, 0.82 to 0.95, 0.83 to 0.95, 0.84 to 0.95, 0.85 to 0.95, or 0.88 to 0.95.

In some embodiments, the cathode active material may comprise a lithium cobalt oxide-based active material, a lithium manganese oxide-based active material, a lithium nickel oxide-based active material, or a lithium iron phosphate (LFP)-based active material (for example, LiFePO4).

In some embodiments, the cathode active material may comprise a manganese-rich active material, a lithium-rich layered oxide (LLO)/over-lithiated oxide (OLO)-based active material, or a cobalt-less active material having a chemical structure or crystal structure represented by Chemical Formula 6.

[Chemical Formula 6] p[Li₂MnO₃]·(1-p)[Li_{q}JO₂]

In Chemical Formula 6, 0<p<1, 0.9≤q≤1.2, and J may comprise at least one element selected from the group consisting of Mn, Ni, Co, Fe, Cr, V, Cu, Zn, Ti, Al, Mg, and B.

The anode active material is not particularly limited. For example, the anode active material may be at least one selected from the group consisting of carbon-based materials such as crystalline carbon, amorphous carbon, carbon composites, and carbon fibers; lithium metal; lithium alloys; silicon-containing materials, and tin-containing materials.

The crystalline carbon may be, for example, graphitic carbon, such as natural graphite, artificial graphite, graphitized coke, mesocarbon microbeads (MCMB), or mesophase pitch-based carbon fiber (MPCF).

Examples of the amorphous carbon may comprise hard carbon, soft carbon, coke, mesocarbon microbeads (MCMB), or mesophase pitch-based carbon fiber (MPCF).

Elements comprised in the lithium alloy may be, for example, aluminum, zinc, bismuth, cadmium, antimony, silicon, lead, tin, gallium, or indium.

The silicon-containing material is not particularly limited as long as it contains silicon, and may be an active material capable of alloying with lithium (Li). For example, the silicon-containing material may be at least one selected from the group consisting of silicon (Si), silicon oxide (SiOx; 0<x<2), metal-doped silicon oxide (SiOx; 0<x<2), carbon-coated silicon oxide (SiOx; 0<x<2), silicon-carbon composite (Si-C), and silicon alloy.

The electrode mixture layer may further comprise a binder. The binder is not particularly limited. For example, the cathode mixture layer may comprise one, two, or more binders, such as polyvinylidene fluoride, styrene butadiene rubber (SBR), polytetrafluoroethylene (PTFE), polyvinylidene fluoride (PVF), vinylidene fluoride/hexafluoropropylene copolymer, polyacrylonitrile, and polymethyl methacrylate.

Additionally, the anode mixture layer may comprise any one selected from the following binders: rubber-based binders such as styrene-butadiene rubber (SBR), fluorinated rubber, ethylene propylene rubber, butadiene rubber, isoprene rubber, and silane-based rubber; cellulose-based binders such as carboxymethylcellulose (CMC), hydroxypropylmethylcellulose, methylcellulose, or alkali metal salts thereof; and combinations thereof.

The electrode mixture layer may further comprise a conductive material. The conductive material is not particularly limited. For example, the conductive material may comprise one or two or more types of graphite such as natural graphite or artificial graphite; carbon-based materials such as carbon black, acetylene black, Ketjen black, channel black, furnace black, lamp black, thermal black, carbon fiber, and carbon nanotubes (CNT); metal powders or metal fibers such as copper, nickel, aluminum, and silver; conductive whiskers such as zinc oxide or potassium titanate; or conductive metal oxides such as titanium oxide; or conductive polymers such as polyphenylene derivatives.

### Example

### 1. Preparation of Sulfide-based Solid Electrolyte

### 1) Example

Sodium sulfide (Na₂S) and lithium chloride (LiCl) were weighed in a 1:2 molar ratio to prepare a sulfur compound and a lithium compound, respectively. The sodium sulfide (Na₂S) and lithium chloride (LiCl) were mixed with ethanol, the first solvent, at a temperature of 25°C or higher (55°C) to prepare a first solution with a concentration of 0.3 M. The first solution was stirred using a magnetic stirrer, and then the precipitated material was filtered under an argon (Ar) atmosphere. At this time, the temperature of the first solution was 15°C to 25°C. The filtered first solution was then dried at 70°C or higher to remove the first solvent, recovering a first mixture containing lithium sulfide (Li₂S) and sodium chloride (NaCl).

The recovered first mixture was mixed with phosphorus pentasulfide (P₂S₅), lithium chloride (LiCl), and a second solvent, acetonitrile, to prepare a second solution. The first mixture, phosphorus pentasulfide (P₂S₅), and lithium chloride (LiCl) were added at 42.7 wt%, 41.4 wt%, and 15.9 wt%, respectively. The second solvent was added at a concentration (100 g/L) of 1 L per 100 g of the raw material mixture.

The second solution was stirred using a magnetic stirrer, and then dried at 70°C or higher to remove the second solvent, obtaining the second mixture. The second mixture was then heat-treated at 550°C in an argon (Ar) atmosphere to obtain a sodium (Na)-doped sulfide-based solid electrolyte.

### 2) Comparative Example

A sulfide-based solid electrolyte was obtained using the same method as in the previous example, except that the first solution was cooled to 0°C before filtering the precipitated material in the first solution in an argon (Ar) atmosphere to maximize the precipitation of sodium chloride (NaCl).

### 2. Evaluation of Sulfide-Based Solid Electrolytes

### 1) Inductively Coupled Plasma Spectroscopy (ICP) Analysis

After measuring a certain amount of sulfide-based solid electrolyte that does not cause any safety issues for the workers due to hydrogen sulfide generated from the sulfide-based solid electrolyte, the corresponding amount of sulfide-based solid electrolyte from the example and comparative example was dissolved in tertiary distilled water that did not contain any ions, and was analyzed by ICP after sufficient reaction. At this time, the sulfide-based solid electrolyte was dissolved in distilled water and allowed to react in the following manner.
1. After mixing 20 mg of sample with 15 mL of distilled water by shaking well, any suspended solids are removed using a 0.45 µm syringe filter if suspended solids are present.
2. Add 5 drops of nitric acid and mix evenly.

Then, to obtain the concentration of element A, ICP analysis was performed using an inductively coupled plasma spectrometer (ICP), and the results are illustrated in Table 1 below. The ICP analysis was performed using an Agilent 700s under the following conditions.
- RF Power (W): 1200
- Coolant gas (L/min): 15
- Auxiliary gas (L/min): 1.5
- Carrier gas (L/min): 0.75

### 1) SEM-EDS Analysis

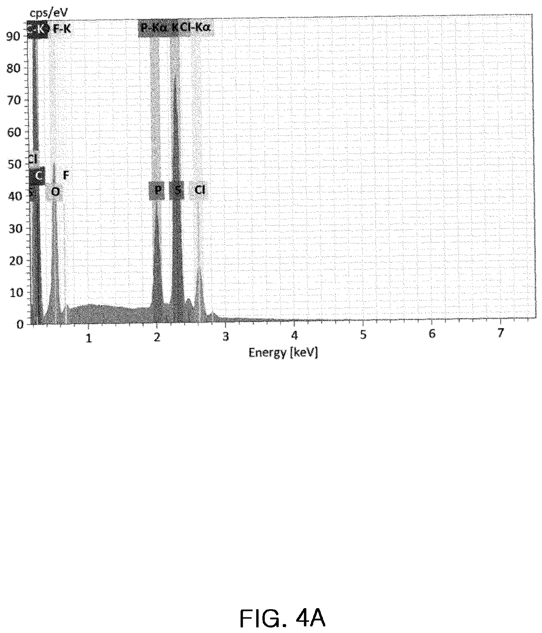

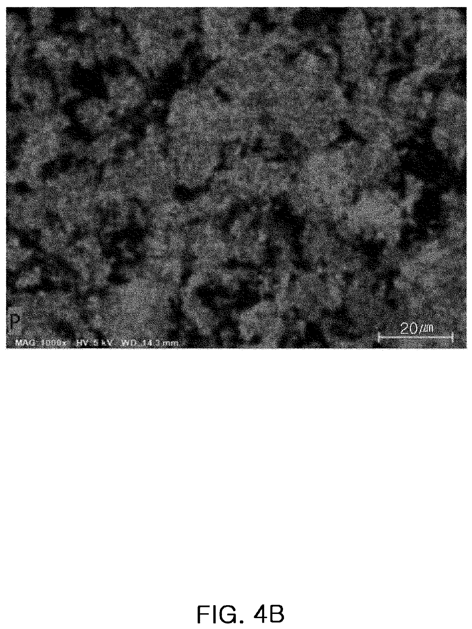

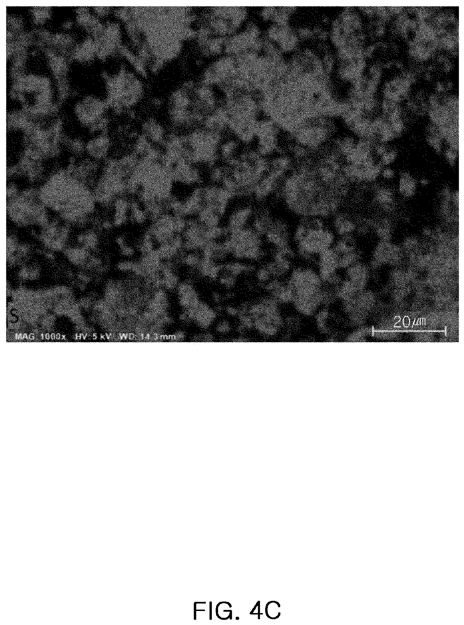

In order to prevent contact with the atmosphere, the sulfide-based solid electrolyte samples of the example and comparative example for SEM-EDS analysis were prepared in a powder state inside a glove box, and then SEM-EDS analysis was performed on the sulfide-based solid electrolytes of the example and comparative example using a scanning electron microscope (SEM) and an energy-dispersive X-ray spectrometer (EDS). The results are illustrated in FIGS. 3A, 3B, 3C, 3D, 4A, 4B and 4C. At this time, the SEM-EDS analysis was performed using a Bruker's FlatQuad equipped with an EDS device linked to an SEM under the conditions of an acceleration voltage of 5 kV, a pulse throughput of 130 kcps, and a working distance of 15 mm.

### 3) Evaluation of Ionic Conductivity and Moisture Stability

### (1) Ionic Conductivity

To determine the lithium ionic conductivity of the sulfide-based solid electrolytes manufactured in the Example and Comparative Example, AC impedance analysis was performed at room temperature, and the results are illustrated in Table 1. In detail, 100 mg of the solid electrolyte was placed in a pressurized mold and subjected to a pressure of 370 MPa to produce pellets. The pellet-shaped solid electrolyte was then placed into a lithium ionic conductivity measurement jig. The jig was then placed in a constant temperature and humidity chamber and left at room temperature for 3 hours. An AC potential of 100 mV was applied, and a frequency sweep was performed from 1000 Hz to 1 MHz. The resulting impedance was used to measure the ionic conductivity.

### (2) Moisture Stability

The sulfide-based solid electrolytes manufactured in the Example and Comparative Example were exposed to air, and the degree of decline in ionic conductivity was measured to evaluate moisture stability. In detail, 100 mg of the solid electrolytes were exposed to air at room temperature (23±5°C) with a dew point of -40°C for 1 hour, and then the ionic conductivity of the solid electrolytes were measured using the same method as described above. Afterwards, the measured ionic conductivity values were compared with the ionic conductivity values before exposure to the air, and the reduction rates were calculated. The results are illustrated in Table 1 below.

**[Table 1]**

| | Example | Comparative Example |
|---|---|---|
| Element A mol% (ICP analysis results) | 1.43 | 0.09 |
| Ionic Conductivity (mS/cm) Before Air Exposure | 2.1 | 1.6 |
| Ionic Conductivity (mS/cm) After Air Exposure | 1.4 | 0.9 |
| Ionic Conductivity Decrease Rate (%) Before and After Air Exposure | 35 | 44 |

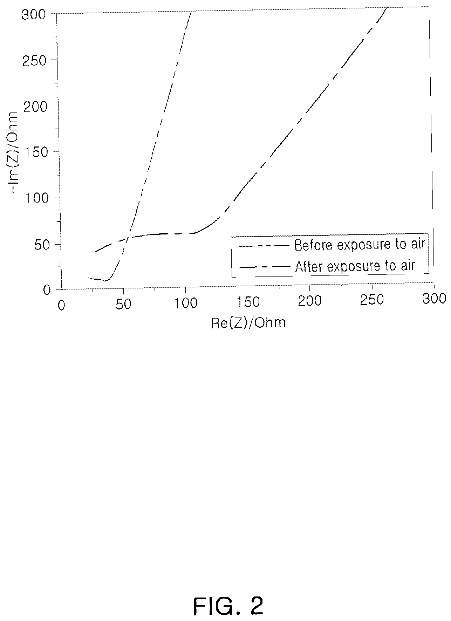

Referring to Table 1, FIGS. 1 and 2, the sulfide-based solid electrolyte of the comparative example, in which element A was not detected during ICP analysis, not only exhibited relatively lower ionic conductivity values before and after exposure to air as compared to the sulfide-based solid electrolyte of the example, but also exhibited a relatively greater decrease rate in ionic conductivity before and after exposure to air.

Meanwhile, referring to FIG. 3A, the sulfide-based solid electrolyte of the example clearly identifies a peak representing element A as a peak with a different binding energy from the peaks representing phosphorus (P) and sulfur (S). Furthermore, referring to FIGS. 3B, 3C and 3D, the sulfide-based solid electrolyte of the example comprises a region (FIG. 3B) representing element A in the EDS mapping image, which differs from the regions representing phosphorus (P) and sulfur (S) (FIGS. 3C and 3D).

On the other hand, referring to FIG. 4A, it can be confirmed that in the sulfide-based solid electrolyte of the comparative example, only peaks representing phosphorus (P) and sulfur (S) are confirmed, and no peak representing element A is detected. In addition, referring to FIGS. 4B and 4C, it can be confirmed that in the sulfide-based solid electrolyte of the comparative example, regions representing phosphorus (P) and sulfur (S) (FIGS. 4B and 4C) are respectively confirmed in the EDS mapping image, but no region representing element A is confirmed.

As set forth above, according to an embodiment, the moisture stability of a sulfide-based solid electrolyte may be improved.

According to another embodiment, the ionic conductivity of a sulfide-based solid electrolyte may be improved.

According to another embodiment, a sulfide-based solid electrolyte may be manufactured with excellent economic efficiency.

According to another embodiment, large-scale synthesis of a sulfide-based solid electrolyte may be facilitated.

Only specific examples of implementations of certain embodiments are described. Variations, improvements and enhancements of the disclosed embodiments and other embodiments may be made based on the disclosure of this patent document.

The present disclosure may also relate to the following aspects.

Aspect 1) A sulfide-based solid electrolyte comprising: 0.1 to 5 mol% of at least one element A selected from the group consisting of Group 1 and Group 2 elements, excluding Li, when analyzed by inductively coupled plasma spectroscopy (ICP).

Aspect 2) In aspect 1, the sulfide-based solid electrolyte is represented by Chemical Formula 1: LiₐPS_{b}(M1)_{c}(M2)_{d}AₓB_{y}, where 1≤a≤6, 1≤b≤5, 0≤c≤3, 0≤d≤3, 0<x≤1, and 0<y≤2, Li is lithium, P is phosphorus, S is sulfur, M1 is a Group 17 element, M2 is a Group 17 element different from M1, A is at least one element selected from the group consisting of Group 1 elements and Group 2 elements, excluding Li, and B is at least one element selected from the group consisting of Group 17 elements, NO₃⁻ and BF₄⁻.

Aspect 3) In aspect 1 or 2, the element A corresponds to A in a compound represented by Chemical Formula 2: AB_{y}, where A is at least one element selected from the group consisting of Group 1 elements and Group 2 elements, excluding Li, B is at least one element selected from the group consisting of Group 17 elements, NO₃⁻ and BF₄⁻, and y is 1 or 2.

Aspect 4) In anyone of aspects 1 to 3, the sulfide-based solid electrolyte has a binding energy of a peak representing element A, different from binding energies of peaks representing phosphorus (P) and sulfur (S) when analyzed by SEM-EDS using a scanning electron microscope (SEM) and an energy-dispersive X-ray spectrometer (EDS).

Aspect 5) In anyone of aspects 1 to 4, the sulfide-based solid electrolyte has a region representing element A in an EDS mapping image different from a region representing phosphorus (P) and sulfur (S), when analyzed by SEM-EDS using a scanning electron microscope (SEM) and an energy-dispersive X-ray spectrometer (EDS).

Aspect 6) A method of manufacturing a sulfide-based solid electrolyte, comprising: preparing a first solution by mixing a sulfur compound represented by Chemical Formula 3: AₓS and a lithium compound represented by Chemical Formula 4: LiB with a first solvent; obtaining a first mixture comprising lithium sulfide (Li₂S) and a compound represented by Chemical Formula 2: AB_{y}, from the first solution; preparing a second solution by mixing the first mixture with either i) diphosphorus pentasulfide (P₂S₅), a first lithium halide, and a second solvent, or ii) diphosphorus pentasulfide (P₂S₅), a first lithium halide, a second lithium halide, and a second solvent; and obtaining a second mixture from the second solution and then heat-treating the second mixture and obtaining a sulfide-based solid electrolyte, wherein the sulfide-based solid electrolyte comprises a content of an element A of 0.1 to 5 mol%, corresponding to A in the compound represented by the chemical formula 2, as analyzed by inductively coupled plasma spectroscopy (ICP), wherein in the chemical formula 2, A is at least one element selected from the group consisting of Group 1 and Group 2 elements excluding Li, B is at least one element selected from the group consisting of Group 17 elements, NO₃⁻ and BF₄⁻, and y is 1 or 2, in the chemical formula 3, A is at least one element selected from the group consisting of Group 1 and Group 2 elements excluding Li, S is sulfur, and x is 1 or 2, and in the chemical formula 4, Li is lithium and B is at least one element selected from the group consisting of Group 17 elements, NO₃⁻ and BF₄⁻.

Aspect 7) In aspect 6, the sulfide-based solid electrolyte is represented by Chemical Formula 1: LiₐPS_{b}(M1)_{c}(M2)_{d}AₓB_{y}, where 1≤a≤6, 1≤b≤5, 0≤c≤3, 0≤d≤3, 0<x≤1, and 0<y≤2, Li is lithium, P is phosphorus, S is sulfur, M1 is a Group 17 element, M2 is a Group 17 element different from M1, A is at least one selected from the group consisting of Group 1 elements and Group 2 elements excluding Li, and B is at least one selected from the group consisting of Group 17 elements, NO₃⁻ and BF₄⁻.

Aspect 8) In aspect 6 or 7, the method further comprises removing a portion of the compound represented by chemical formula 2, prior to the obtaining a first mixture from the first solution.

Aspect 9) In aspect 8, the removing a portion of the compound represented by the chemical formula 2 is performed by cooling the first solution to 15°C to 25°C.

Aspect 10) In anyone of aspects 6 to 9, the first solvent comprises at least one selected from the group consisting of alcohol-based solvents, tetrahydrofuran-based solvents, and phosphoramide-based solvents.

Aspect 11) In anyone of aspects 6 to 10, the second solvent comprises at least one selected from the group consisting of alcohol-based solvents, tetrahydrofuran-based solvents, cyanide-based solvents, and phosphoramide-based solvents.

Aspect 12) In anyone of aspects 6 to 11, wherein the heat treating of the second mixture is performed at a temperature of 250°C to 650°C.

Aspect 13) An all-solid state battery comprising the sulfide-based solid electrolyte of anyone of aspects 1 to 5.

## Claims

1. A sulfide-based solid electrolyte comprising:
0.1 to 5 mol% of at least one element A selected from the group consisting of Group 1 and Group 2 elements, excluding Li, when analyzed by inductively coupled plasma spectroscopy (ICP).

2. The sulfide-based solid electrolyte of claim 1, wherein the sulfide-based solid electrolyte is represented by Chemical Formula 1: LiₐPS_{b}(M1)_{c}(M2)_{d}AₓB_{y}, where 1≤a≤6, 1≤b≤5, 0≤c≤3, 0≤d≤3, 0<x≤1, and 0<y≤2, Li is lithium, P is phosphorus, S is sulfur, M1 is a Group 17 element, M2 is a Group 17 element different from M1, A is at least one element selected from the group consisting of Group 1 elements and Group 2 elements, excluding Li, and B is at least one element selected from the group consisting of Group 17 elements, NO₃⁻ and BF₄⁻.

3. The sulfide-based solid electrolyte of claim 1 or 2, wherein the element A corresponds to A in a compound represented by Chemical Formula 2: AB_{y}, where A is at least one element selected from the group consisting of Group 1 elements and Group 2 elements, excluding Li, B is at least one element selected from the group consisting of Group 17 elements, NO₃⁻ and BF₄⁻, and y is 1 or 2.

4. The sulfide-based solid electrolyte of anyone of claim 1 to 3, wherein the sulfide-based solid electrolyte has a binding energy of a peak representing element A, different from binding energies of peaks representing phosphorus (P) and sulfur (S) when analyzed by SEM-EDS using a scanning electron microscope (SEM) and an energy-dispersive X-ray spectrometer (EDS).

5. The sulfide-based solid electrolyte of anyone of claim 1 to 4, wherein the sulfide-based solid electrolyte has a region representing element A in an EDS mapping image different from a region representing phosphorus (P) and sulfur (S), when analyzed by SEM-EDS using a scanning electron microscope (SEM) and an energy-dispersive X-ray spectrometer (EDS).

6. A method of manufacturing a sulfide-based solid electrolyte, comprising:
preparing a first solution by mixing a sulfur compound represented by Chemical Formula 3: AₓS and a lithium compound represented by Chemical Formula 4: LiB with a first solvent;
obtaining a first mixture comprising lithium sulfide (Li₂S) and a compound represented by Chemical Formula 2: AB_{y}, from the first solution;
preparing a second solution by mixing the first mixture with either i) diphosphorus pentasulfide (P₂S₅), a first lithium halide, and a second solvent, or ii) diphosphorus pentasulfide (P₂S₅), a first lithium halide, a second lithium halide, and a second solvent; and
obtaining a second mixture from the second solution and then heat-treating the second mixture and obtaining a sulfide-based solid electrolyte,
wherein the sulfide-based solid electrolyte comprises a content of an element A of 0.1 to 5 mol%, corresponding to A in the compound represented by the chemical formula 2, as analyzed by inductively coupled plasma spectroscopy (ICP),
wherein in the chemical formula 2, A is at least one element selected from the group consisting of Group 1 and Group 2 elements excluding Li, B is at least one element selected from the group consisting of Group 17 elements, NO₃⁻ and BF₄⁻, and y is 1 or 2,
in the chemical formula 3, A is at least one element selected from the group consisting of Group 1 and Group 2 elements excluding Li, S is sulfur, and x is 1 or 2, and
in the chemical formula 4, Li is lithium and B is at least one element selected from the group consisting of Group 17 elements, NO₃⁻ and BF₄⁻.

7. The method of claim 6, wherein the sulfide-based solid electrolyte is represented by Chemical Formula 1: LiₐPS_{b}(M1)_{c}(M2)_{d}AₓB_{y}, where 1≤a≤6, 1≤b≤5, 0≤c≤3, 0≤d≤3, 0<x≤1, and 0<y≤2, Li is lithium, P is phosphorus, S is sulfur, M1 is a Group 17 element, M2 is a Group 17 element different from M1, A is at least one selected from the group consisting of Group 1 elements and Group 2 elements excluding Li, and B is at least one selected from the group consisting of Group 17 elements, NO₃⁻ and BF₄⁻.

8. The method of claim 6 or 7, further comprising removing a portion of the compound represented by chemical formula 2, prior to the obtaining a first mixture from the first solution.

9. The method of claim 8, wherein the removing a portion of the compound represented by the chemical formula 2 is performed by cooling the first solution to 15°C to 25°C.

10. The method of anyone of claim 6 to 9, wherein the first solvent comprises at least one selected from the group consisting of alcohol-based solvents, tetrahydrofuran-based solvents, and phosphoramide-based solvents.

11. The method of claim anyone of 6 to 10, wherein the second solvent comprises at least one selected from the group consisting of alcohol-based solvents, tetrahydrofuran-based solvents, cyanide-based solvents, and phosphoramide-based solvents.

12. The method of anyone of claim 6 to 11, wherein the heat treating of the second mixture is performed at a temperature of 250°C to 650°C.

13. An all-solid state battery comprising the sulfide-based solid electrolyte of anyone of claim 1 to 5.
